(19) Europäisches Patentamt
European Patent Office
Office européen des brevets

(11) Publication number: 0 041 298
A2

(12) # EUROPEAN PATENT APPLICATION

(21) Application number: 81200567.6

(22) Date of filing: 26.05.81

(51) Int. Cl.³: A 01 N 47/20

(30) Priority: 02.06.80 NL 8003194

(43) Date of publication of application: 09.12.81 Bulletin 81/49

(84) Designated Contracting States: AT BE CH DE FR GB IT LI NL SE

(71) Applicant: DUPHAR INTERNATIONAL RESEARCH B.V
C.J. van Houtenlaan 36
1381 CP Weesp(NL)

(72) Inventor: Paerels, Gerard Bernard
c/o Octrooibureau Zoan B.V. Apollolaan 151
NL-1077 AR Amsterdam(NL)

(72) Inventor: Raven, Cornelis Wouter
c/o Octrooibureau Zoan B.V. Apollolaan 151
NL-1077 AR Amsterdam(NL)

(74) Representative: Swaters, Pieter D., Drs. et al,
Octrooibureau ZOAN B.V. Apollolaan 151
NL-1077 AR Amsterdam(NL)

(54) **Composition for inhibiting or preventing the development of suckers in tobacco plants.**

(57) Composition for inhibiting or preventing the development of suckers in tobacco plants.

The invention relates to a composition for inhibiting or preventing the development of suckers in tobacco plants comprising as the active substance a carbamate of the formula

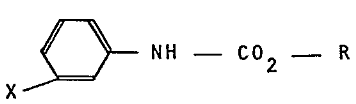

wherein X is a chlorine or bromine atom, and
R is an ethyl or n-propyl group.

The compositions may be used in a dosage from 50 to 5,000 g of active substance per hectare.

EP 0 041 298 A2

0041298
81200567.6

DIR 0312

DUPHAR INTERNATIONAL RESEARCH B.V.

Composition for inhibiting or preventing the development of suckers in tobacco plants.

The invention relates to a composition for inhibiting or preventing the development of suckers in tobacco plants, which composition comprises a carbamate as the active substance in addition to a solid or liquid inert carrier material. The invetion furthermore relates to a method of preparing this composition, as well as to a method of inhibiting or preventing the development of suckers in tobacco plants.

In agriculture and horticulture it is often desirable to inhibit or suppress the development of suckers. This applies in particular to those plants in which sucker formation frequently occurs, for example, tobacco plants. Said suckers consume many nutrients which hence cannot become available to other parts of plants, such as the leaves. It is known that, notably in tobacco, the size and the quality of the leaves is very detrimentally influenced by the development of suokers. Since in particular in large areas with tobacco, the manual removal of the suckers is time-consuming and hence expensive, it is just in this culture that the need for a chemical agent to inhibit or prevent the development of suckers is largest.

A large number of carbamates is known for use as herbicides.
It is suggested in Japanese Patent application 74/92230 to use a mixture of 500 ppm of benzyl N,N-dipropylthiolcarbamate and 1,000 ppm of isopropyl N-(3-chlorophenyl)carbamate on tobacco plants so as to prevent the development of suckers. By using this synergistic combination a complete suppression of the sucker formation is said to be reached, while isopropyl N-(3--chlorophenyl)carbamate alone in a quantity of 1,000 ppm is said to prevent the sucker formation for only 48%. The isopropyl N-(3-chlorophenyl)carbamate or Chlorpropham mentioned in this patent application is a known herbicide and is marketed for this application under the trade name Chloro-IPC or CIPC. It has now been found, however, that isopropyl N-(3-chlorophenyl)

carbamate in a formulation in acetone/water prepared according to example I (see hereinafter), when applied to tobacco plants in the glasshouse in a quantity of 1,000 ppm of active substance, has such a strong phytotoxic activity that the tobacco plants are seriously damaged; even in a dosage of 100 ppm do the tobacco plants still suffer damage by this substance. The formulation of isopropyl N-(3-chlorophenyl)carbamate which is marketed under the trade name CIPC, causes, even in a quantity of 30 ppm, damage to the tobacco plants under the same conditions, as will become apparent from example I.

In United States Patent specification 4,095,971 a carbamate known also for herbicidal application, namely N-phenyl-1-(ethylcarbamoyl)ethylcarbamate (D-isomer) or Carbetamide is recommended for preventing the sucker formation in tobacco plants. The product is marketed for herbicidal application under the trade name Legurame.

It has been found that N-phenyl-1-(ethylcarbamoyl)ethyl carbamate (D-isomer) in a formulation in acetone/water prepared according to example I (see hereinafter), indeed counteracts the formation of suckers effectively when applied to tobacco plants in the glasshouse; the lowest dose with which the substance is still active is 300 ppm. In contrast with what is suggested in the above-mentioned United States Patent specification 4,095,971 it has been found, however, that the same product produces damage to the tobacco plants already in a dose of 300 ppm. The commercial formulation Legurame 30 E comprising Carbetamide as the active substance, causes damage to the tobacco plants under the same conditions already in a dosage of 100 ppm, as will become apparent from example I.

United States Patent specification 3,253,904 discloses various carbamates for counteracting the development of suckers in tobacco plants. Stated is, for example, the use of a composition which comprises an ester of m-chlorocarbanilic acid and 2-chloroethanol as the active substance; this composition is said to have an excellent activity.

As will become apparent from example I, the above ester indeed prevents the formation of suckers of tobacco plants in the glasshouse satisfactorily, provided at least a dose of 300 ppm is used. In a dose of 1,000 ppm, however, the tobacco plants are

damaged. So with this ester there is an -albeit small- difference between lowest active dose and lowest dose with which the plants are damaged. For practical applications, however, such a difference is deemed to be too small because the user preferably uses a small overdose so as to be absolutely sure of a good result, and because upon application a perfectly homogeneous distribution of the active substance over the plants is never reached.

It has surprisingly been found that a composition which comprises a carbamate as the active substance of the general formula

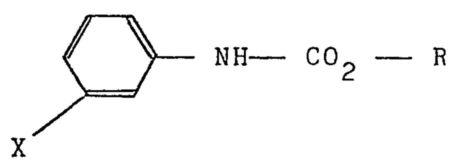

wherein X is a chlorine or a bromine atom, and

R is an ethyl or n-propyl group,

is very suitable for inhibiting or preventing the development of suckers in tobacco plants. It has in fact been found that the above active substance is not phytotoxic for the tobacco plants, i.e. does not damage the plants, not only in that dose with which an effective inhibition or control of the development of suckers is reached, but also in much larger dosages, e.g. in an at least ten-fold dose when applied in the glasshouse. As appears from example II a considerable safe margin is also present in field trials using the composition of the invention. So in a composition according to the invention the difference between lowest active dose and a lowest dose by which the plants are not damaged (safe margin) is so large that such a composition can be applied to the tobacco plants without any risk.

To be preferred is a composition according to the invention having as the active substance a compound of the general formula

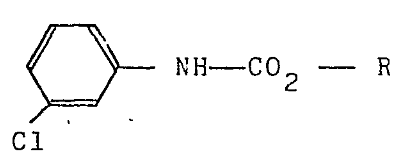

wherein R has the above-given meaning, because this active substance is commercially available or can simply be prepared from sheap raw materials.

The carbamates which are processed as active substances in the compositions according to the invention are generally known and for a part even commercially available compounds. As stated above, these compounds can be prepared in a simple manner, for example, by reaction of an isocyanate with an alcohol; in formulae:

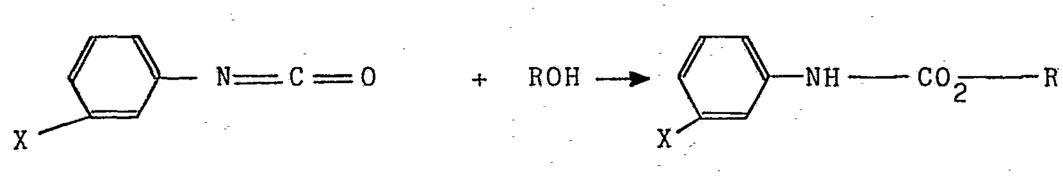

In the compositions according to the invention the active substance is mixed with solid carrier material or dissolved or dispersed in liquid carrier material, if desired in combination with auxiliary substances, for example, emulsifiers, wetting agents, dispersing agents and stabilizers.

Examples of compositions according to the invention are aqueous solutions and dispersions, oily solutions and oily dispersions, solutions in organic solvents, pastes, dusting powders, dispersible powders, miscible oils, granules, pellets and aerosol compositions.

Dispersible powders, pastes and miscible oils are compositions in concentrate from which are diluted prior to or during use.

The solutions in organic solvents are mainly used in air application, namely when large areas are treated with a comparatively small quantity of composition. The solutions of the active substance in organic solvents may be provided with a phytotoxicity-reducing substance, for example, wool fat, wool fatty acid or wool fatty alcohol.

A few forms of composition will be described in greater detail hereinafter by way of example.

Granular compositions are prepared by taking up, for example, the active substance in a solvent or dispersing it in a diluent and impregnating the resulting solution/suspen-

sion, if desired in the presence of a binder, on granular carrier material, for example porous granules (for example pumice and attaclay), mineral non-porous granules (sand or ground marlow), organic granules (for example, dried coffee grounds, cut tobaccostems or ground corncobs). A granular composition can also be prepared by compressing the active substance together with powdered minerals in the presence of lubricants and binders and disintegrating the compressed product to the desired grain size and sieving it. Granular compositions can be prepared in a different manner by mixing the active substance in powder form with powdered fillers, and glomulating the mixture then to the desired particle size.

Dusting powders can be obtained by intimately mixing the active substance with an inert solid powdered carrier material, for example, talcum.

Dispersible powders are prepared by mixing 10 to 80 parts by weight of a solid inert carrier, for example kaolin, dolomite, gypsum, chalk, bentonite, attapulgite, colloidal $SiO_2$ or mixtures of these and similar substances, with 10 to 80 parts by weight of the active substance, 1 to 5 parts by weight of a dispersing agent, for example the lignine sulphonates or alkylnaphthalene sulphonates known for this purpose, preferably also 0.5 to 5 parts by weight of a wetting agent, for example, fatty alcohol sulphates, alkyl aryl sulphonates, fatty acid condensation products, or polyoxyethylene compounds, and finally, if desired, other additives.

For the preparation of miscible oils the active compound is dissolved in a suitable solvent which preferably is poorly water-miscible, and one or more emulsifiers are added to this solution. Suitable solvents are, for example, xylene, toluene, petroleum distillates which are rich in aromates, for example, solvent naphtha, distilled tar oil and mixtures of these liquids. As emulsifiers may be used, for example, polyoxyethylene compounds and/or alkyl aryl sulphonates. The concentration of the active compound in these miscible oils is not restricted to narrow limits and may vary, for example, between 2 and 50% by weight.

In addition to a miscible oil may also be mentioned as a liquid and highly concentrated primary composition a solution of the

active substance in a readily water-miscible liquid, for example, a glycol, a glycol ether, dimethylformamie, or N-methylpyrrolidone, to which solution a dispersing agent and, if desired, a surface-active substance has been added. When diluting with water shortly before or during spraying, an aqueous dispersion of the active substance is then obtained.

An aerosol composition according to the invention is obtained in the usual manner by incorporating the active substance, if desired in a solvent, in a volatile liquid to be used as a propellant, for example, a mixture of chlorine-fluorine derivatives of methane and ethane, a mixture of lower hydrocarbons, dimethyl ether, or gases such as carbon dioxide, nitrogen and nitrous oxide.

In addition to the above-mentioned ingredients, the agents according to the invention may also contain other substances known for use in this type of agents, For example, a lubricant, for example, calcium stearate or magnesium stearate, may be added to a dispersible powder or a mixture to be granulated. "Adhesives", for example, polyvinylalcohol, cellulose derivatives or other colloidal materials, such as casein, may also be added so as to improve the adhesion of the pesticide to the crop. Furthermore, a substance may be added to reduce the phytotoxicity of the active substance, carrier material or auxiliary substance, for example, wool fat or wool fatty alcohol.

Growth regulating and pesticidal compounds known per se may also be incorporated in the compositions according to the invention. As a result of this the activity spectrum of the composition is widened and synergism may occur. In addition foliar fertilizers may be present.

For use in such a combination composition are to be considered, in addition to insecticidal and acaricidal compounds known per se, the following known growth regulating and fungicidal compounds:

Growth regulators, for example:

1. higher alcohols, for example, octanol and decanol;
2. lower esters of fatty acids;
3. ethylene-generators, for example, (2-chloroethyl)phosphonic acid and 2-chloroethyl-tris(2-methoxyethoxy)silane;

4. nitrodiphenylethers;
5. substituted dinitroanilines, for example, 2-chloro-N-ethyl-6-fluoro -N-[2,6-dinitro-4-(trifluoromethyl)phenyl]benzene-methaneamine;
6. trifluoromethylsulphonylamino compounds;
7. piperidinederivatives;
8. benzylthiocarbamates, for example, benzyl N,N'-dipropylthio-carbamate;
9. phosphorothionoamidates and amidothionophosphonic acid esters;
10. benzoxazoles;

and furthermore: maleic hydrazide; 2,3:4,6-di-O-isopropylidene-α-xylo-2-hexulo-furanosonic acid-sodium; N,N-dimethylaminosuccinic acid; α-cyclopropyl-4-methoxy-α-(pyrimidin-5-yl)benzyl alcohol; 2-chloroethyltrimethyl ammonium; N,N-di(phosphonomethyl) glycine; 9-hydroxyfluorene-9-carbonic acid (or ester); 2-chloro-9-hydroxyfluorene-9-carbonic acid (or ester); N-1-naphthylphthalaminic acid; 2,3-dihydro-5,6-diphenyl-1,4-oxathiine; N-(3,4-dimethyl-3-cyclohexenyl)butylamine; and 3,5-dinitro-2,6-dimethyl-4-tert.-butylacetophenone;
or mixtures of these compounds.

<u>Fungicides, for example</u>:

1. organic tin compounds, for example, triphenyl tin hydroxide and triphenyl tin acetate;
2. alkylene bisdithiocarbamates, for example, zinc ethylenebis-dithiocarbamate and manganese ethylene bisdithiocarbamate;
3. 1-acyl- or 1-carbamoyl-N-benzimidazole (-2) carbamates and 1,2-bis (3-alkoxycarbonyl-2-thiureido)benzene;

and furthermore 2,4-dinitro-6-(2-octylphenylcrotonate), 1-[bis (dimethylamino)phosphoryl]-3-phenyl-5-amino-1,2,4-triazole, N-trichloromethylthiophthalimide, N-trichloromethylthiotetra-hydrophthalimide, N-(1,1,2,2-tetrachloroethylthio)-tetrahydrophthalimide, N-dichlorofluoromethylthio-N-phenyl-N,N'-dimethylsulphamide, tetrachloroisophthalonitrile, 2-(4'-thiazolyl)-benzimidazole, 5-butyl-2-ethylamino-6-methylpyrimidine-4-yl-dimethyl-sulphamate, 1-(4-chlorophenoxy)-3,3-dimethyl-1(1,2,4-triazole-1-yl)-2-butanone, α-(2-chlorophenyl)-α-(4-chlorophenyl)-5-pyrimidinemethanol, 1-(isopropylcarbamoyl)-3-(3,5-dichlorophenyl) hydantoin, N-(1,1,2,2-tetrachloroethylthio)-4-cyclohexene-1,2-carboximide, N-trichloromethylmercapto-4-cyclohexene-1,2-dicar-

boximide, N-tridecyl-2,6-dimethylmorpholine, metal salts of ethylphosphite, and N-(2,6-dimethylphenyl-N-methoxyacetyl)alanine methylester, or mixtures of these compounds.

The dosage of the composition according to the invention desired for practical application will depend *inter alia* on the active substance chosen, the form of composition, the type of tobacco which is to be treated, the condition of the crop and the weather conditions. In general it holds that favourable results are achieved with a dosage which corresponds to 50-5,000 g of the active substance per hectare. This dosage may be applied in one time but may also be applied by means of repeated sprayings.

The invention will now be described in greater detail with reference to the following specific examples.

EXAMPLE I

2.5 g of alkylphenylpolyoxyethylene and 2.5 g of a mixture of an alkylphenylsulphonate and a polyoxyethylene compound were dissolved in 3 litres of acetone. This solution was used as a solvent for the active substances. The quantity by weight of active substance necessary for the desired concentration -see table- was dissolved in 2 ml of the above solvent. Immediately before spraying, 18 ml of water were added to the solution thus obtained. If the active substance did not dissolve in the above--mentioned solvent, the compound, after having been ground, was dispersed in the solvent.

In the glasshouse, young tobacco plants, 9 weeks old, were sprayed with the resulting compositions; six days before spraying, the tops of the plants had been removed. At the time of spraying the uppermost suckers were up to approxmiately 0.6 cm long. Per concentration 3 plants were used of which only the suckers, the phyllopodium and the stem were sprayed.

Two weeks after spraying the activity of the active substances was determined by finding out whether the development of the suckers had been suppressed. The results of this evaluation are recorded in Table A. In this table, the column "lowest active dose" indicates at which dosage of the active substance the suckers were completely killed and the formation of new suckers was suppressed. The lowest dosage of the active substance with which the tobacco plants were still damaged is recorded in

the table in the column "lowest dose with damage".

TABLE A

| Active substance | Lowest active dose (in ppm) | Lowest dose with damage(in ppm) |
|---|---|---|
| ethyl N-(3-chlorophenyl) carbamate | 30 | 1,000 |
| n-propyl N-(3-chlorophenyl)carbamate | 30 | 3,000 |
| Blank | no activity | no damage |
| isopropyl N-(3-chlorophenyl)carbamate (Chlorpropham); known | 30 | 100 |
| Ditto; commerical formulation (CIPC); known | 100 | 30 |
| N-phenyl-1-(ethylcarbamoyl)ethylcarbamate(D-isomer) (Carbetamide); known | 300 | 300 |
| Ditto; Commerical formulation (Legurame 30 E); known | 300 | 100 |
| 2-chloroethyl N-(3-chlorophenyl)carbamate; known | 300 | 1,000 |

EXAMPLE II

Full grown tobacco plants -nearly flowering- were sprayed in the field with compositions prepared as described in Example I. Prior to spraying the tops of the plants were removed. Two weeks after spraying the activity of the compositions was evaluated as described in Example I. The results of this evaluation are recorded in Table B, in which the meanings of the symbols are as follows:

sucker inhibiting effect: + = strong growth inhibition
++ = very strong effect, the suckers are dead

phytotoxicity to plants: $\pm$ = starting damage to the plants
– = no damage

TABLE B

| active substance | conc. in mg/l | sucker inhibiting effect | phytotoxicity to plants |
| --- | --- | --- | --- |
| blank | - | no activity | - |
| ethyl N-(3-chlorophenyl)carbamate | 500 | ++ | - |
| | 1000 | ++ | - |
| | 1500 | ++ | - |
| ethyl N-(3-bromophenyl)carbamate | 500 | ++ | - |
| | 1000 | ++ | - |
| | 1500 | ++ | - |
| n-propyl N-(3-bromophenyl)carbamate | 500 | + | - |
| | 1000 | ++ | - |
| | 1500 | ++ | - |
| isopropyl N-(3-chlorophenyl) carbamate (known) | 500 | ++ | - |
| | 1000 | ++ | ± |
| | 1500 | ++ | ± |

0041298
81200567.6



CLAIMS:

1. A composition for inhibiting or preventing the development of suckers in tobacco plants, which composition comprises a carbamate as the active substance in addition to a solid or liquid inert carrier material, characterized in that the active substance is a compound of the general formula

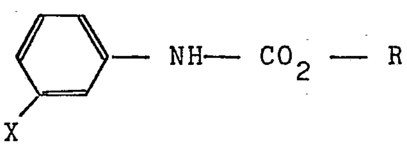

wherein X is a chlorine or bromine atom, and
R is an ethyl or n-propyl group.

2. A composition as claimed in Claim 1, characterized in that the active substance is a compound of the general formula

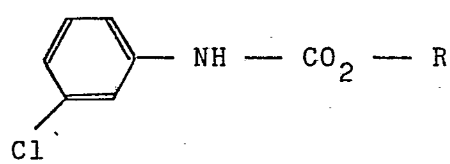

wherein R has the meaning given in Claim 1.

3. A method of preparing a composition for inhibiting or preventing the development of suckers in tobacco plants by incorporating a carbamate as the active substance in a solid or liquid inert carrier, if desired while adding other growth inhibitors, pesticidal compounds, leaf fertilizers and/or auxiliary substances, for example wetting agents, emulsifiers, dispersing agents and stabilizers, characterized in that the active substance used is a compound of the general formula

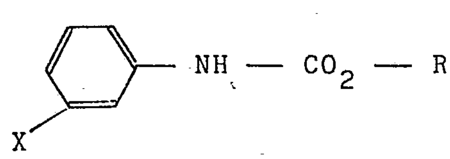

wherein X and R have the meanings given in Claim 1.

4. A method of inhibiting or preventing the development of suckers in tobacco plants, characterized in that the tobacco plants are treated with a composition as claimed in Claim 1 or 2 in a dosage which corresponds to 50 to 5,000 g of active substance per hectare.